(19) Europäisches Patentamt / European Patent Office / Office européen des brevets

(11) **EP 4 340 285 A1**

(12) **EUROPEAN PATENT APPLICATION**
published in accordance with Art. 153(4) EPC

(43) Date of publication:
**20.03.2024 Bulletin 2024/12**

(21) Application number: **22814879.7**

(22) Date of filing: **12.04.2022**

(51) International Patent Classification (IPC):
***H04L 5/00*** *(2006.01)*

(52) Cooperative Patent Classification (CPC):
**H04L 5/00;** Y02D 30/70

(86) International application number:
**PCT/CN2022/086395**

(87) International publication number:
**WO 2022/252832 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021 CN 202110597413
24.08.2021 CN 202110978420**

(71) Applicant: **Huawei Technologies Co., Ltd.
Shenzhen, Guangdong 518129 (CN)**

(72) Inventors:
• **WU, Haibing
Shenzhen, Guangdong 518129 (CN)**
• **LI, Xueru
Shenzhen, Guangdong 518129 (CN)**

(74) Representative: **Maiwald GmbH
Engineering
Elisenhof
Elisenstrasse 3
80335 München (DE)**

(54) **REFERENCE SIGNAL SENDING METHOD AND DEVICE**

(57)    This application discloses a reference signal sending method and a device. The method includes: A first device generates n groups of reference signals, where $n \geq 2$; in the n groups of reference signals, a first group of reference signals includes M1 first reference signals sent at an interval, and a second group of reference signals includes M2 second reference signals sent at an interval; and a sending time interval between the first reference signals is $S_1 T$, a sending time interval between the second reference signals is $S_2 T$, $S_1$ and $S_2$ are coprime positive integers, T is a time length of one time unit, and M1 and M2 are integers greater than 1. The first device sends the n groups of reference signals. At least two groups of reference signals are sent at specific time intervals for measurement, so that a unique measurement value can be obtained, to reduce power consumption of the first device, and implement unambiguous velocity measurement.

FIG. 5

EP 4 340 285 A1

**Description**

This application claims priorities to Chinese Patent Application No. 202110597413.2, filed with the China National Intellectual Property Administration on May 31, 2021 and entitled "DOUBLE SCALE-BASED VELOCITY MEASUREMENT SEQUENCE PATTERN DESIGN METHOD", and to Chinese Patent Application No. 202110978420.7, filed with the China National Intellectual Property Administration on August 24, 2021 and entitled "REFERENCE SIGNAL SENDING METHOD AND DEVICE", both of which are incorporated herein by reference in their entireties.

**TECHNICAL FIELD**

This application relates to the field of wireless positioning/communication/sensing technologies, and in particular, to a reference signal sending method and a device.

**BACKGROUND**

In the field of wireless positioning/communication/sensing technologies, velocity measurement is an important and basic capability of a sensing system. How to implement unambiguous velocity measurement with low power consumption when a device performs velocity measurement is an important subject.

How to implement unambiguous velocity measurement with low power consumption is a problem that needs to be resolved in this application.

**SUMMARY**

This application provides a reference signal sending method and a device, to implement unambiguous velocity measurement with low power consumption.

According to a first aspect, a reference signal sending method is provided, including: A first device generates n groups of reference signals, where n≥2; in the n groups of reference signals, a first group of reference signals includes M1 first reference signals sent at an interval, and a second group of reference signals includes M2 second reference signals sent at an interval; and a sending time interval between the first reference signals is $S_1T$, a sending time interval between the second reference signals is $S_2T$, $S_1$ and $S_2$ are coprime positive integers, T is a time length of one time unit, and M1 and M2 are integers greater than 1. The first device sends the n groups of reference signals. In this aspect, at least two groups of reference signals are sent at specific time intervals for measurement, so that a unique measurement value can be obtained, to reduce power consumption of the first device, and implement unambiguous velocity measurement.

The first device may be a sensing device that can perform both sending and receiving.

With reference to the first aspect, in a possible implementation, the first device sends the n groups of reference signals in one time period. In the time period, a difference between a time point of an earliest first reference signal in the first group of reference signals in the n groups of reference signals and a time point of an earliest second reference signal in the second group of reference signals is less than or equal to a first threshold; and/or in the time period, a difference between a time point of a last first reference signal in the first group of reference signals in the n groups of reference signals and a time point of a last second reference signal in the second group of reference signals is less than or equal to a second threshold. In this implementation, actually, if start time points and/or end time points of the two groups of reference signals greatly differ, a velocity of a target has changed greatly when the two groups of reference signals are separately measured, causing a large deviation in a final velocity measurement result. Therefore, the difference between the earliest reference signals in the two groups of reference signals should be less than or equal to the first threshold, and/or the difference between the last reference signals in the two groups of reference signals should be less than or equal to the second threshold, so that the deviation of the final measurement result is small.

With reference to the first aspect, in another possible implementation, in the n groups of reference signals, a ratio of total duration of the first group of reference signals to total duration of the second group of reference signals is less than or equal to a third threshold, where the total duration of the first group of reference signals is a difference between the time point of the last first reference signal in the first group of reference signals and the time point of the earliest first reference signal in the first group of reference signals, and the total duration of the second group of reference signals is a difference between the time point of the last second reference signal in the second group of reference signals and the time point of the earliest second reference signal in the second group of reference signals. In this implementation, because the total duration of the reference signals is directly related to a physical resolution of velocity measurement, to enable the two groups of reference signals to have close velocity resolutions, the ratio of the total duration of the two groups of reference signals should be kept within a specific threshold range.

With reference to the first aspect, in still another possible implementation, the M1 first reference signals sent at an interval include reference signals repeatedly sent at least twice, and the reference signals repeatedly sent at least twice are determined based on a same sequence. Alternatively, the M1 first reference signals sent at an interval include one reference signal determined based on a first sequence and one reference signal determined based on a second sequence, the first sequence and the second sequence are components of a third sequence, and lengths of the first sequence and the second sequence are respectively N1 and N2. In this implementation, content of reference signals sent in a plurality of time units may be the same or different.

With reference to the first aspect, in still another possible implementation, the method further includes: determining a third sequence x(l) whose length is N3, where l=0, 1, ..., or N3-1, the third sequence is any one of the following sequences: a Zad-off Chu sequence, an m-sequence, a Gold sequence, or a Gray sequence, and N1 is greater than or equal to a sum of N1 and N2; sending the first sequence x(i) in a first time unit, where a1≤i<b1, a1≥0, and b1-a1=N1; and sending the second sequence x(j) in a second time unit, where c1≤j<d1, c1 is an integer greater than or equal to b1, d1<N3, d 1-c 1 = N2, and a time interval between the second time unit and the first time unit is $S_1$T.

With reference to the first aspect, in still another possible implementation, the M2 second reference signals sent at an interval include reference signals repeatedly sent at least twice, and the reference signals repeatedly sent at least twice are determined based on a same sequence. Alternatively, the M2 second reference signals sent at an interval include one reference signal determined based on a fourth sequence and one reference signal determined based on a fifth sequence, the fourth sequence and the fifth sequence are components of a sixth sequence, and lengths of the fourth sequence and the fifth sequence are respectively N4 and N5.

With reference to the first aspect, in still another possible implementation, the method further includes: determining a sixth sequence y(w) whose length is N6, where w=0, 1, ..., or N6-1, the sixth sequence is any one of the following sequences: a Zad-off Chu sequence, an m-sequence, a Gold sequence, or a Gray sequence, and N6 is greater than or equal to a sum of N4 and N5; sending the fourth sequence y(p) in a third time unit, where a2≤p<b2, a2≥0, and b2-a2=N4; and sending the fifth sequence y(v) in a fourth time unit, where c2≤v<d2, c2 is an integer greater than or equal to b2, d2<N6, d2-c2=N5, and a time interval between the fourth time unit and the fifth time unit is $S_2$T.

With reference to the first aspect, in still another possible implementation, the third sequence is the Zad-off Chu sequence, and that the first device determines a third sequence x(l) whose length is N3 includes: The first device determines a ZC sequence whose length is N3:

$$x(l) = Ae^{j\alpha l}x_q(l \bmod N_{ZC}),$$

where l = 0, 1, 2, ..., or N3 - 1; and

$$x_q(m) = e^{-j\frac{\pi q m(m+1)}{N_{ZC}}}.$$

r(l) is the third sequence whose length is N3, where l = 0,1, 2, ..., or N3 - 1; $N_{ZC}$ is a largest prime number less than or equal to N3, a smallest prime number greater than N3, a largest prime number less than or equal to 2N3, or a smallest prime number greater than 2N3; q is an integer greater than 0 and less than $N_{ZC}$; A is a complex number unrelated to l; $\alpha$ is a real number unrelated to l; and j is an imaginary unit.

The method further includes: The first device divides the third sequence into M segments, where a length of each segment is $K_i$, i = 0,1, 2, ..., or $M - 1$, $N3 = \sum_{i=0}^{M-1} K_i$, and M is a positive integer not greater than the quantity M1 of first reference signals in the first group of reference signals or the quantity M2 of second reference signals in the second group of reference signals. The first device is capable of determining, based on the third sequence, the first sequence whose length is $K_1$ and the second sequence whose length is $K_2$, where the first sequence and the second sequence are segments of the third sequence.

With reference to the first aspect, in still another possible implementation, the third sequence is the m-sequence, and that the first device determines a third sequence x(l) whose length is N3 includes: The first device determines an m-sequence whose length is N3:

$$r(l) = x((l + w) \bmod N_M),$$

where $l$ = 0,1, 2, ..., or N3 - 1; and

$$x(m + N) = \left(c_N x(m + N - 1) + c_{N-1} x(m + N - 2) + \cdots + c_1 x(m)\right) mod 2,$$

where m=0, 1, ..., or $2^N - N - 2$; and $c_i$ is a feedback coefficient of an $i^{th}$ register, and a value of $c_i$ is 1 or 0, where i=1, 2, ..., or N, N is a quantity of stages of a shift register, w is an integer unrelated to $l$, and $N_M = 2^N - 1$.

With reference to the first aspect, in still another possible implementation, the third sequence is the Gold sequence, and that the first device determines a third sequence x(l) whose length is N3 includes: The first device determines a Gold sequence whose length is N3:

$$r(l) = \left(x_1(l + N_{c1}) + x_2(l + N_{c2})\right) mod 2,$$

where 1=0, 1, ..., or $N_3 - 1$.

$x_1$ and $x_2$ are both m-sequences, and $N_{c1}$ and $N_{c2}$ are integers.

With reference to the first aspect, in still another possible implementation, the method further includes: obtaining a velocity relative to a first target object, where the velocity is obtained by measuring reflected reference signals of the n groups of reference signals. In this implementation, the first device may obtain the velocity of the first target object in a self-sending and self-receiving manner.

With reference to the first aspect, in still another possible implementation, the method further includes: receiving indication information, where the indication information indicates a velocity of the first device relative to a first target object or a result of measuring the n groups of reference signals. In this implementation, the first device may obtain the velocity of the first target object in a manner of self-sending and receiving from another device.

With reference to the first aspect, in still another possible implementation, n≥3, a third group of reference signals includes M3 third reference signals sent at an interval, a sending time interval of the third group of reference signals is $S_3 T$, M3 is an integer greater than 1, and $S_1$, $S_2$, and $S_3$ are coprime numbers. In this implementation, there may be pairing ambiguity and target combination problems in a multi-target scenario. Three or more groups of reference signals are sent at specific time intervals for multi-target measurement, so that the unique unambiguous velocity of each target can be obtained, thereby reducing the power consumption of the first device, and implementing the unambiguous velocity measurement.

With reference to the first aspect, in still another possible implementation, the method further includes: obtaining a first velocity of the first device relative to a first target object and a second velocity of the first device relative to a second target object, where the first velocity and the second velocity are obtained by measuring the n groups of reference signals.

With reference to the first aspect, in still another possible implementation, the method further includes: determining a positioning parameter of the first target object and a positioning parameter of the second target object based on the n groups of reference signals, where the positioning parameter includes at least one of the following: a distance and an angle; and obtaining the velocity of the first device relative to the first target object and the velocity of the first device relative to the second target object based on the positioning parameter of the first target object and the positioning parameter of the second target object. In this implementation, the n groups of reference signals are sent at specific time intervals for multi-target measurement, a plurality of targets can be identified with reference to the spatial sensing parameters obtained by measuring the n groups of reference signals, and the unique unambiguous velocity of each target can be obtained, thereby reducing the power consumption of the first device, and implementing the unambiguous velocity measurement.

According to a second aspect, a first device is provided, and can implement the reference signal sending method in the first aspect. For example, the first device may be a chip or a terminal. The foregoing method may be implemented by software, hardware, or hardware executing corresponding software.

In a possible implementation, the first device may include a processing unit and a transceiver unit. The processing unit is configured to generate n groups of reference signals, where n≥2; in the n groups of reference signals, a first group of reference signals includes M1 first reference signals sent at an interval, and a second group of reference signals includes M2 second reference signals sent at an interval; and a sending time interval between the first reference signals is $S_1 T$, a sending time interval between the second reference signals is $S_2 T$, $S_1$ and $S_2$ are coprime positive integers, T is a time length of one time unit, and M1 and M2 are integers greater than 1. The transceiver unit is configured to send the n groups of reference signals.

Optionally, the first device sends the n groups of reference signals in one time period, where in the time period, a difference between a time point of an earliest first reference signal in the first group of reference signals in the n groups of reference signals and a time point of an earliest second reference signal in the second group of reference signals is less than or equal to a first threshold; and/or in the time period, a difference between a time point of a last first reference signal in the first group of reference signals in the n groups of reference signals and a time point of a last second reference signal in the second group of reference signals is less than or equal to a second threshold.

Optionally, in the n groups of reference signals, a ratio of total duration of the first group of reference signals to total duration of the second group of reference signals is less than or equal to a third threshold, where the total duration of the first group of reference signals is a difference between the time point of the last first reference signal in the first group of reference signals and the time point of the earliest first reference signal in the first group of reference signals, and the total duration of the second group of reference signals is a difference between the time point of the last second reference signal in the second group of reference signals and the time point of the earliest second reference signal in the second group of reference signals.

Optionally, the M1 first reference signals sent at an interval include reference signals repeatedly sent at least twice, and the reference signals repeatedly sent at least twice are determined based on a same sequence. Alternatively, the M1 first reference signals sent at an interval include one reference signal determined based on a first sequence and one reference signal determined based on a second sequence, the first sequence and the second sequence are components of a third sequence, and lengths of the first sequence and the second sequence are respectively N1 and N2.

Optionally, the processing unit is further configured to determine a third sequence x(l) whose length is N3, where l=0, 1, ..., or N3-1, the third sequence is any one of the following sequences: a Zad-off Chu sequence, an m-sequence, a Gold sequence, or a Gray sequence, and N1 is greater than or equal to a sum of N1 and N2. The transceiver unit is further configured to send the first sequence x(i) in a first time unit, where $a1 \leq i < b1$, $a1 \geq 0$, and b1-a1=N1. The transceiver unit is further configured to send the second sequence x(j) in a second time unit, where $c1 \leq j < d1$, c1 is an integer greater than or equal to b1, d1<N3, d1-c1 = N2, and a time interval between the second time unit and the first time unit is $S_1 T$.

Optionally, the M2 second reference signals sent at an interval include reference signals repeatedly sent at least twice, and the reference signals repeatedly sent at least twice are determined based on a same sequence. Alternatively, the M2 second reference signals sent at an interval include one reference signal determined based on a fourth sequence and one reference signal determined based on a fifth sequence, the fourth sequence and the fifth sequence are components of a sixth sequence, and lengths of the fourth sequence and the fifth sequence are respectively N4 and N5.

Optionally, the processing unit is further configured to determine a sixth sequence y(w) whose length is N6, where w=0, 1, ..., or N6-1, the sixth sequence is any one of the following sequences: a Zad-off Chu sequence, an m-sequence, a Gold sequence, or a Gray sequence, and N6 is greater than or equal to a sum of N4 and N5. The transceiver unit is further configured to send the fourth sequence y(p) in a third time unit, where $a2 \leq p < b2$, $a2 \geq 0$, and b2-a2=N4. The transceiver unit is further configured to send the fifth sequence y(v) in a fourth time unit, where $c2 \leq v < d2$, c2 is an integer greater than or equal to b2, d2<N6, d2-c2=N5, and a time interval between the fourth time unit and the fifth time unit is $S_2 T$.

Optionally, the processing unit is further configured to obtain a velocity relative to a first target object, where the velocity is obtained by measuring reflected reference signals of the n groups of reference signals.

Optionally, the transceiver unit is further configured to receive indication information, where the indication information indicates a velocity of the first device relative to a first target object or a result of measuring the n groups of reference signals.

Optionally, $n \geq 3$, a third group of reference signals includes M3 third reference signals sent at an interval, a sending time interval of the third group of reference signals is $S_3 T$, M3 is an integer greater than 1, and $S_1$, $S_2$, and $S_3$ are coprime numbers.

Optionally, the processing unit is further configured to obtain a first velocity of the first device relative to a first target object and a second velocity of the first device relative to a second target object, where the first velocity and the second velocity are obtained by measuring the n groups of reference signals.

Optionally, the processing unit is further configured to determine a positioning parameter of the first target object and a positioning parameter of the second target object based on the n groups of reference signals, where the positioning parameter includes at least one of the following: a distance and an angle. The processing unit is further configured to obtain the velocity of the first device relative to the first target object and the velocity of the first device relative to the second target object based on the positioning parameter of the first target object and the positioning parameter of the second target object.

In a possible implementation, the first device in the second aspect includes a processor coupled to a memory, and the processor is configured to support the apparatus in performing a corresponding function in the foregoing reference signal sending method. The memory is configured to be coupled to the processor, and stores a program (instructions) and/or data necessary for the apparatus. Optionally, the first device may further include a communication interface configured to support communication between the apparatus and another network element. Optionally, the memory may be located inside or outside the first device.

In another possible implementation, the first device in the second aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to implement the foregoing method through a logic circuit or by executing code instructions. The transceiver apparatus may be a transceiver, a transceiver circuit, or an input/output interface, and is configured to receive a signal from a first device other than the first device and transmit the signal to the processor; or send, to a first device other than the first device, a signal that is from the processor. When the first device is the chip, the transceiver apparatus is the transceiver circuit or the input/output interface.

When the first device in the second aspect is the chip, a sending unit may be an output unit, for example, an output circuit or a communication interface; and a receiving unit may be an input unit, for example, an input circuit or a communication interface. When the first device is the terminal, a sending unit may be a transmitter, and a receiving unit may be a receiver.

According to a third aspect, a computer-readable storage medium is provided. The computer-readable storage medium stores a computer program or instructions. When the computer program or instructions are executed, the method in the first aspect is implemented.

According to a fourth aspect, a computer program product including instructions is provided. When the instructions are run on a first device, the first device is enabled to perform the method in the first aspect.

**BRIEF DESCRIPTION OF DRAWINGS**

FIG. 1 is a schematic diagram of an architecture of an integrated communication and sensing system according to an embodiment of this application;
FIG. 2 is a schematic diagram of an intelligent driving scenario according to an embodiment of this application;
FIG. 3 a shows a velocity measurement reference signal pattern;
FIG. 3b shows another velocity measurement reference signal pattern;
FIG. 4 shows another velocity measurement reference signal pattern according to an embodiment of this application;
FIG. 5 is a schematic flowchart of a reference signal sending method according to an embodiment of this application;
FIG. 6 shows a double-scale velocity measurement reference signal pattern according to an embodiment of this application;
FIG. 7 is a schematic diagram of unambiguous velocity measurement using double-scale reference signals according to an embodiment of this application;
FIG. 8 is a schematic diagram of key parameters of a velocity measurement reference signal on a time axis according to an embodiment of this application;
FIG. 9 is a schematic diagram of pairing ambiguity in velocity measurement performed on two targets by using two scales;
FIG. 10 is a schematic diagram of a target combination problem in a multi-target scenario;
FIG. 11 is a schematic flowchart of another reference signal sending method according to an embodiment of this application;
FIG. 12 is a schematic flowchart of still another reference signal sending method according to an embodiment of this application;
FIG. 13 is a schematic diagram of a structure of a first device according to an embodiment of this application; and
FIG. 14 is a schematic diagram of a structure of another first device according to an embodiment of this application.

**DESCRIPTION OF EMBODIMENTS**

The following describes embodiments of this application with reference to the accompanying drawings in embodiments of this application.

This application may be applied to a 4th generation (4th generation, 4G) mobile communication system, a 5th generation (5th generation, 5G) mobile communication system, and the like, and may also be applied to another communication system, for example, an ultra-wideband (ultra-wideband, UWB) communication system. In the communication system, an entity needs to receive indication information, can feed back information and transmit data in an uplink, and may further send and/or receive a reference signal and the like. Another entity needs to send downlink data and a reference signal.

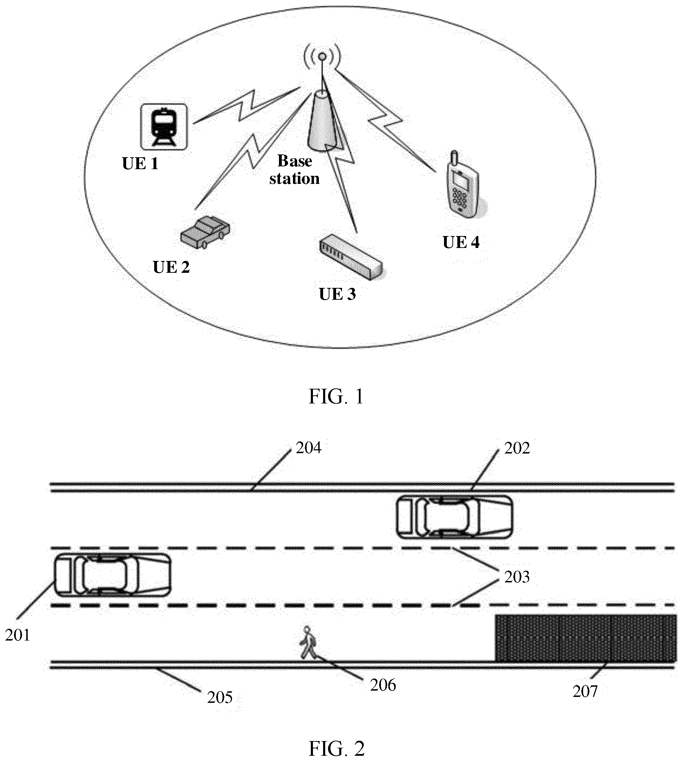

FIG. 1 is a schematic diagram of an architecture of an integrated communication and sensing system according to an embodiment of this application. The communication system includes a radio access network device, a terminal, and a sensed target. The sensed target may be a vehicle, a pedestrian, a brick on a road, or the like. In the integrated communication and sensing system, a first device may be the radio access network device or the terminal. When the first device is the radio access network device, the radio access network device may send downlink data to the terminal, or may receive uplink data sent by the terminal. As the first device, the radio access network device may send a reference signal, and receive a signal reflected by the sensed target, to estimate a velocity, a distance, an angle, and the like of the sensed target. When the first device is the terminal, the terminal may receive downlink data sent by the radio access network device, or may send uplink data to the radio access network device. As the first device, the terminal may send a reference signal, and receive a signal reflected by the sensed target, to estimate a velocity, a distance, an angle, and the like of the sensed target.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or a unit, for example, a central unit (central unit, CU) or a distributed unit (distributed unit, DU), that completes a part of functions of a base station. The radio access network device may be a macro base station, may be a micro base station or an indoor base station, or may be a relay node, a donor node, or the like. A specific technology and a specific device form that are used by the radio access network device are not limited in embodiments of this application. For ease of description, the following provides descriptions by using an example in which the radio access network device is the base station.

The terminal may also be referred to as user equipment (user equipment, UE), a mobile station, a mobile terminal, and the like. The terminal device may be widely used in various scenarios, for example, a device-to-device (device-to-device, D2D) scenario, a vehicle-to-everything (vehicle-to-everything, V2X) communication scenario, a machine-type communications (machine-type communications, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal device may be a mobile phone, a tablet computer, a computer with a wireless transceiver function, a wearable device, a vehicle, an unmanned aerial vehicle, a helicopter, an airplane, a ship, a robot, a robot arm, a smart home device, or the like. A specific technology and a specific device form that are used by the terminal device are not limited in embodiments of this application.

The base station and the terminal may be fixed or movable. The base station and the terminal may be deployed on the land, including an indoor device, an outdoor device, a handheld device, or a vehicle-mounted device; may be deployed on the water; or may be deployed on an airplane, a balloon, and an artificial satellite in the air. Application scenarios of the base station and the terminal are not limited in embodiments of this application.

Communication may be performed between a base station and a terminal, between base stations, and between terminals through a licensed spectrum, through an unlicensed spectrum, or through both a licensed spectrum and an unlicensed spectrum. Communication may be performed through a spectrum below 6 gigahertz (gigahertz, GHz), through a spectrum above 6 GHz, or through both a spectrum below 6 GHz and a spectrum above 6 GHz. A spectrum resource for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as the smart grid, the industrial control, the smart transportation, and the smart city. A function of the terminal may alternatively be performed by a module (for example, a chip or a modem) in the terminal, or may be performed by an apparatus including the function of the terminal.

Maximum unambiguous velocity

In wireless sensing, velocity measurement is an important and basic capability of a sensing system. For example, in an intelligent driving scenario, important parameters related to a driving route, a velocity, and safety of a vehicle include velocities of another vehicle and a pedestrian. FIG. 2 is a schematic diagram of an intelligent driving scenario according to an embodiment of this application. The scenario includes a vehicle 201, where at least one sensor (not shown in the figure) is installed in the vehicle 201, and the vehicle 201 further includes an intelligent driving apparatus (not shown in the figure). The sensor is configured to sense environment information around the vehicle 201, for example, a lane line 203 of a lane in which the vehicle 201 travels, a lane line 204 of an adjacent lane (namely, a lane adjacent to the lane in which the vehicle 201 travels), a road edge boundary 205, a pedestrian 206, a construction area 207, and another vehicle (for example, a front vehicle 202, a side vehicle (not shown in the figure), or a rear vehicle (not shown in the figure)). The sensor transmits the sensed environment information to a first device. For another example, in a smart home scenario, a velocity is important data in applications such as an interactive game, fitness, and behavior monitoring (for example, sports and health monitoring on elderly living alone).

If a target moves excessively far (in other words, a velocity is excessively high) at a time interval between two reference signals, and a real phase shift of the target exceeds 180°, a phase shift value less than 180° is assigned to the target, and a velocity value corresponding to the phase shift is also less than a real velocity value. Consequently, the obtained velocity is incorrect, in other words, velocity ambiguity occurs.

An unambiguous velocity is an obtainable radial velocity value relative to an object target.

The maximum unambiguous velocity is a radial velocity value that is of a target object and that corresponds to a measurable maximum phase shift, namely, 180°, from one reference signal to a next reference signal.

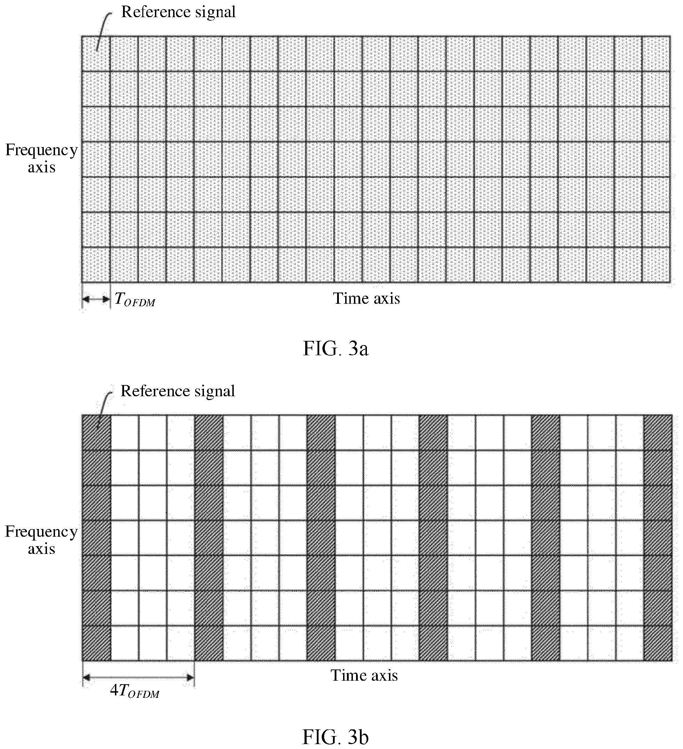

For example, in FIG. 3a, reference signals continuously occupy all OFDM symbols to implement measurement of a maximum unambiguous velocity whose theoretical value is $\dfrac{c_0}{4f_c T_{OFDM}}$, where $c_0$ is a propagation velocity of an electromagnetic wave, and a unit of $c_0$ is m/s; $f_c$ is a center frequency of a carrier, and a unit of $f_c$ is Hz; and $T_{OFDM}$ is duration of one OFDM symbol, and a unit of $T_{OFDM}$ is s.

For another example, in FIG. 3b, there is an interval of four symbols between two adjacent reference signals, and a theoretical value of a maximum unambiguous velocity obtained based on this pattern of the reference signal is $\dfrac{c_0}{4f_c 4T_{OFDM}}$. In this case, a plurality of possible velocities $v_{start} + kv_{step}(k = 0, \pm1, ... \pm K_{max})$ may be obtained within a velocity range of interest (which is a maximum unambiguous velocity $\dfrac{c_0}{4f_c T_{OFDM}}$ that is measurable when reference signals occupy all symbols), where $v_{start}$ is a measured velocity value that may be ambiguous; $v_{step}$ is ambiguity of velocity measurement, and is equal to twice the theoretical value of the maximum unambiguous velocity; and k is a quantity of integral cycles of the ambiguity.

For example, when the reference signals occupy all the symbols, the measurable maximum unambiguous velocity is $\pm20$ m/s.

When there are four symbols between two adjacent reference signals, the measurable maximum unambiguous velocity is $\pm5$ m/s, an actual relative velocity of a terminal relative to a first target object is 7 m/s, and measured $v_{start}$ is -3 m/s. In this case, the obtained possible velocity value is -3+k* 10. Generally, it is considered that the possible velocity value needs to fall within a range of the maximum unambiguous velocity (namely, $\pm20$ m/s) that is measurable when the reference signals occupy all the symbols. In this case, obtained possible velocity values are - 13 m/s, -3 m/s, 7 m/s, or 17 m/s.

However, the maximum unambiguous velocity obtained in the embodiment shown in FIG. 3b is a quarter of a maximum unambiguous velocity $\dfrac{c_0}{4f_c T}$ that is measurable when reference signals are sent at an interval of a time length of one time unit, namely, $\dfrac{c_0}{16f_c T}$.

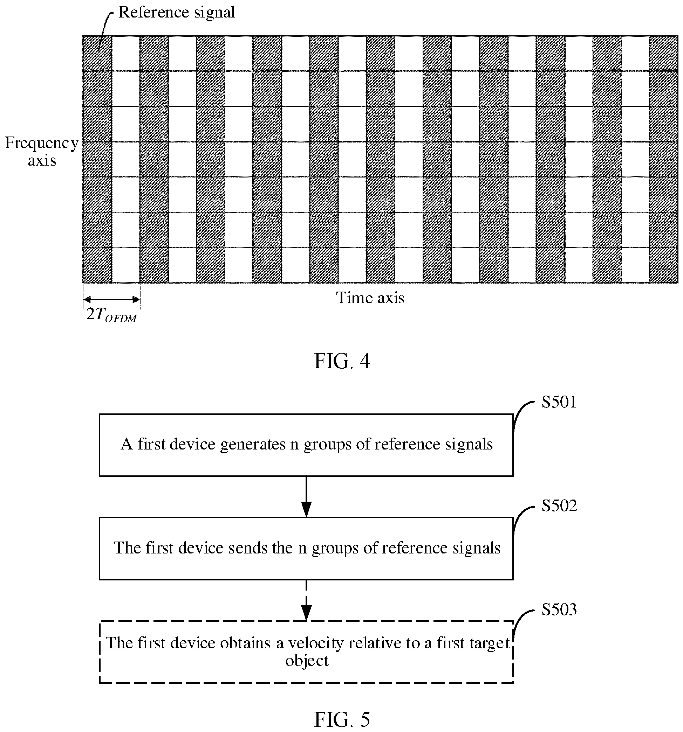

In this embodiment, one group of reference signals is sent for single-target velocity measurement, where the group of reference signals includes M4 fourth reference signals sent at an interval, where M4 is an integer greater than 1. It is assumed that there are 21 OFDM symbols in total in a velocity measurement reference signal pattern shown in FIG. 4, and one fourth reference signal may be sent every two OFDM symbols. In this case, 11 symbol resources are required in total. The first device obtains, through measurement of the group of reference signals, a velocity of the terminal relative to the first target object. A maximum unambiguous velocity is half of the maximum unambiguous velocity $\dfrac{c_0}{4f_c T}$ that is measurable when the reference signals are sent at the interval of the time length of one time unit, namely, $\dfrac{c_0}{8f_c T}$.

According to the solution in this embodiment, the first device needs to send only one group of reference signals to obtain a maximum unambiguous velocity with high precision.

The terminal sends a reference signal on a time-frequency resource to perform velocity measurement. A measurable maximum unambiguous velocity is related to a time interval of carrying two adjacent reference signals. A shorter interval indicates a larger measurable maximum unambiguous velocity. In the velocity measurement reference signal pattern shown in FIG. 3a, using an example in which the reference signals are carried on orthogonal frequency division multiplexing (orthogonal frequency division multiplexing, OFDM) symbols (a modulation technology is not limited to an OFDM waveform), the reference signals occupy all the OFDM symbols to implement measurement of the maximum unambiguous velocity. However, the reference signals need to be continuously sent to occupy all the symbol resources. Consequently, power consumption of the terminal is high. In addition, because the reference signals occupy all the time-frequency resources, a communication signal cannot be sent on the time-frequency resources. This is unfavorable to integrated sensing and communication.

Further, to reduce the power consumption and balance communication and sensing performance, a velocity measurement reference signal pattern with a large cycle is generally used. In the velocity measurement reference signal pattern shown in FIG. 3b, there are four symbols between two adjacent reference signals. In this way, there is no need to send the reference signal on each symbol, and power consumption can be lower than that generated when the symbols are fully occupied. In addition, the communication signal is sent on another symbol, to balance the communication and sensing performance. However, the measurable maximum unambiguous velocity is correspondingly lower than that generated when the reference signals occupy all the symbols. Compared with the maximum unambiguous velocity when the symbols are fully occupied, a maximum unambiguous velocity when an interval between two adjacent reference signals is $S_1$ symbols is reduced to $1/S_1$.

It can be learned that there is a mutual constraint between low power consumption and unambiguous velocity measurement. To achieve the low power consumption, it is necessary to send reference signals at a time interval that is as small as possible, but this results in a significant reduction in a measurable maximum unambiguous velocity. To increase the measurable maximum unambiguous velocity, the reference signals need to be sent as densely as possible, but this results in increased power consumption. Therefore, while the power consumption is reduced, it is necessary to make the measurable maximum unambiguous velocity consistent with that generated when the reference signals occupy all the symbols, in other words, a comprehensively good effect needs to be achieved between the low power consumption and the unambiguous velocity measurement.

This application further provides a sensing solution. A first device sends at least two groups of reference signals at a specific time interval for measurement, so that a unique measurement value can be obtained, to reduce power consumption of the first device, and implement unambiguous velocity measurement.

The solution in this application can be applied to velocity measurement in scenarios such as intelligent driving and smart home, and can also be applied to a distance measurement and the like.

Based on the foregoing integrated communication and sensing system, as shown in FIG. 5, an embodiment of this application provides a sensing method. The method includes the following steps.

S501: A first device generates n groups of reference signals, where n≥2; in the n groups of reference signals, a first group of reference signals includes M1 first reference signals sent at an interval, and a second group of reference signals includes M2 second reference signals sent at an interval; and a sending time interval between the first reference signals is $S_1T$, a sending time interval between the second reference signals is $S_2T$, $S_1$ and $S_2$ are coprime positive integers, T is a time length of one time unit, and M1 and M2 are integers greater than 1.

This embodiment is applied to a single-target velocity measurement scenario, to be specific, measurement of a velocity of the first device relative to one target (namely, a first target object). The first device may be a sensing device that can perform both sending and receiving.

The first device generates the n groups of reference signals, where n≥2. The first group of reference signals in the n groups of reference signals includes the M1 first reference signals sent at an interval, and the second group of reference signals includes the M2 second reference signals sent at an interval. The sending time interval between the first reference signals is $S_1T$, and the sending time interval between the second reference signals is $S_2T$.

To uniquely determine a possible velocity value (within a range of a maximum unambiguous velocity $\dfrac{c_0}{4f_cT}$ that is measurable when reference signals are sent at an interval of a time length of one time unit) under a dual-reference-signal condition, $S_1$ and $S_2$ are coprime positive integers. A reason is as follows:

If $S_1$ and $S_2$ are not coprime numbers, it is assumed that $S_1 = u_1G$, and $S_2 = u_1F$, where $u_1$ is a common divisor that is not 1, and G and F are positive integers not equal to each other. Assuming that velocities obtained by using two reference signals are respectively $v_{start1}$ and $v_{start2}$, and quantities of integral cycles of corresponding ambiguity are respectively $k_1$ and $k_2$, velocity values of the target that are obtained by using the two reference signals are respectively

$$v_{start1} + \frac{k_1}{S_1}\frac{2c_0}{4f_cT} \quad \text{and} \quad v_{start2} + \frac{k_2}{S_2}\frac{2c_0}{4f_cT}. \text{ Theoretically, } v_{start1} + \frac{k_1}{S_1}\frac{2c_0}{4f_cT} = v_{start2} + \frac{k_2}{S_2}\frac{2c_0}{4f_cT}, \text{ and}$$

$$v_{start1} + \frac{k_1 + u_2G}{S_1}\frac{2c_0}{4f_cT} = v_{start2} + \frac{k_2 + u_2F}{S_2}\frac{2c_0}{4f_cT} \text{ may be obtained, where } u_2 \text{ is a positive integer less than } u_1.$$

This means that a plurality of velocities are obtained, to be specific, there are a plurality of possible velocities that are both in at least one first candidate velocity value determined by using the first group of reference signals and in at least one second candidate velocity value determined by using the second group of reference signals. Therefore, $S_1$ and $S_2$ are necessarily coprime numbers, so that a uniquely determined unambiguous velocity can be obtained under the dual-reference-signal condition.

T is the time length of one time unit, and may be specifically one OFDM symbol, one slot (slot), one frame, one ultra-wideband (ultra-wideband, UWB) pulse, a burst (burst) including several pulses, a UWB symbol, a UWB frame, or the like.

In this embodiment, each group of reference signals is sent in a plurality of time units.

In an implementation, content of the reference signals sent in the plurality of time units may be the same.

Specifically, in the first group of reference signals, the M1 first reference signals sent at an interval include reference signals repeatedly sent at least twice, and the reference signals repeatedly sent at least twice are determined based on a same sequence. For example, the M1 first reference signals sent at an interval may include M1 repeatedly sent reference signals.

Similarly, in the second group of reference signals, the M2 second reference signals sent at an interval include reference signals repeatedly sent at least twice, and the reference signals repeatedly sent at least twice are determined based on a same sequence. For example, the M2 second reference signals sent at an interval may include M2 repeatedly sent reference signals.

In another implementation, content of the reference signals sent in the plurality of time units may be different.

Specifically, in the first group of reference signals, the M1 first reference signals sent at an interval include one reference signal determined based on a first sequence and one reference signal determined based on a second sequence, the first sequence and the second sequence are components of a third sequence, and lengths of the first sequence and the second sequence are respectively N1 and N2.

A method for sending the first sequence and the second sequence based on the third sequence includes:

determining a third sequence x(l) whose length is N3, where l=0, 1, ..., or N3-1, and the third sequence is any one of the following sequences: a Zad-off Chu (Zad-off Chu, ZC) sequence, an m-sequence, a Gold sequence, or a Gray sequence (Golay sequence), N3 is greater than or equal to a sum of N1 and N2, and a specific sequence used as the third sequence is not limited in this application;

sending the first sequence x(i) in a first time unit, where a1$\leq$i<b1, a1$\geq$0, and b1-a1 =N1; and

sending the second sequence x(j) in a second time unit, where c1$\leq$j<1, c1 is an integer greater than or equal to b1, d1<N3, d 1-c 1 = N2, and a time interval between the second time unit and the first time unit is $S_1T$.

An example in which the third sequence is the ZC sequence is used. The ZC sequence is proposed by Zad-off and Chu, and has excellent self-correlation and poor cross-correlation. ZC sequences may be classified into two types. A first type is generated by performing cyclic shift on a basic sequence. Based on a characteristic that discrete Fourier transform (discrete Fourier transform, DFT) of a ZC sequence is still a ZC sequence, a second type is generated by first performing DFT on a ZC sequence and then performing inverse fast Fourier transform (inverse fast Fourier transform, IFFT).

First, a ZC sequence whose length is N3 is determined:

$$\mathrm{x}(l) = Ae^{j\alpha l}x_q(l \bmod N_{ZC}),$$

where l = 0, 1, 2, ..., or N3 - 1; and

$$x_q(m) = e^{-j\frac{\pi q m(m+1)}{N_{ZC}}}.$$

r(l) is the third sequence whose length is N3, where l = 0,1, 2, ..., or N3 - 1; $N_{ZC}$ is a largest prime number less than or equal to N3, a smallest prime number greater than N3, a largest prime number less than or equal to 2N3, or a smallest prime number greater than 2N3; q is an integer greater than 0 and less than $N_{ZC}$; A is a complex number unrelated to l; $\alpha$ is a real number unrelated to l; and j is an imaginary unit.

The third sequence is divided into M segments, where a length of each segment is $K_i$, i = 0,1, 2, ..., or $M$ - 1,

$\mathrm{N3} = \sum_{i=0}^{M-1} K_i$, and M is a positive integer not greater than the quantity M1 of first reference signals in the first group of reference signals or the quantity M2 of second reference signals in the second group of reference signals.

The first sequence whose length is $K_1$ and the second sequence whose length is $K_2$ may be determined based on the third sequence, where the first sequence and the second sequence are segments of the third sequence.

The first device respectively sends the first sequence in the first time unit, and sends the second sequence in the second time unit, where the time interval between the second time unit and the first time unit is $S_1T$.

An example in which the third sequence is the m-sequence is used. The m-sequence, short for a maximum linear feedback shift register sequence, is a sequence that has a longest cycle and that is generated by a shift register with linear feedback, and is a typical pseudo-random sequence. First, an m-sequence whose length is N3 is determined:

$$\text{r}(l) = x((l+w)\text{mod}\ N_M),$$

where $l$ = 0,1, 2, ..., or N3 - 1; and

$$\text{x}(m+N) = \big(c_N x(m+N-1) + c_{N-1}x(m+N-2) + \cdots + c_1 x(m)\big)mod2,$$

where m=0, 1, ..., or $2^N$ - N - 2.

$c_i$ is a feedback coefficient of an $i^{th}$ register, and a value of $c_i$ is 1 or 0, where i=1, 2, ..., or N, N is a quantity of stages of a shift register, w is an integer unrelated to $l$, and $N_M = 2^N$ - 1.

For a subsequent step, refer to the foregoing descriptions of the case in which the third sequence is the ZC sequence.

An example in which the third sequence is the Gold sequence is used. A Gold code is a pseudo-random code derived from the m-sequence, and has a pseudo-random characteristic similar to that of the m-sequence, but a quantity of Gold sequences is greater than that of m-sequences under a same length. First, a Gold sequence whose length is N3 is determined:

$$r(l) = \big(x_1(l+N_{c1}) + x_2(l+N_{c2})\big)mod2,\ \text{where}\ l{=}0,\ 1,\ ...,\ \text{or}\ N_3 - 1.$$

where $l$=0, 1, ..., or $N_3$ - 1.

$x_1$ and $x_2$ are both m-sequences, and $N_{c1}$ and $N_{c2}$ are integers.

For a subsequent step, refer to the foregoing descriptions of the case in which the third sequence is the ZC sequence.

In addition, the third sequence may alternatively be the Gray sequence. The Gray sequence is a complementary sequence, and has a good time domain composition characteristic and a good frequency domain complementation characteristic. After appropriate signal conversion, the Gray sequence may be used as a spread spectrum technology to serve as a detection signal of a system. For a method for sending the first sequence and the second sequence based on the Gray sequence, refer to the foregoing descriptions of the other sequences.

Similarly, in the second group of reference signals, the M2 second reference signals sent at an interval include one reference signal determined based on a fourth sequence and one reference signal determined based on a fifth sequence, the fourth sequence and the fifth sequence are components of a sixth sequence, and lengths of the fourth sequence and the fifth sequence are respectively N4 and N5.

A method for sending the fourth sequence and the fifth sequence based on the sixth sequence includes:

determining a sixth sequence y(w) whose length is N6, where w=0, 1, ..., or N6-1, the sixth sequence is any one of the following sequences: a Zad-off Chu sequence, an m-sequence, a Gold sequence, or a Gray sequence, N6 is greater than or equal to a sum of N4 and N5, and a specific sequence used as the sixth sequence is not limited in this application;

sending the fourth sequence y(p) in a third time unit, where a2≤p<b2, a2≥0, and b2-a2=N4; and

sending the fifth sequence y(v) in a fourth time unit, where c2≤v<d2, c2 is an integer greater than or equal to b2, d2<N6, d2-c2=N5, and a time interval between the fourth time unit and the fifth time unit is $S_2T$.

In a single-target scenario, n may be equal to 2 or greater than 2. In this embodiment, n=2 is used as an example for description. To be specific, the method in this embodiment is a double scale-based velocity measurement reference signal pattern design method.

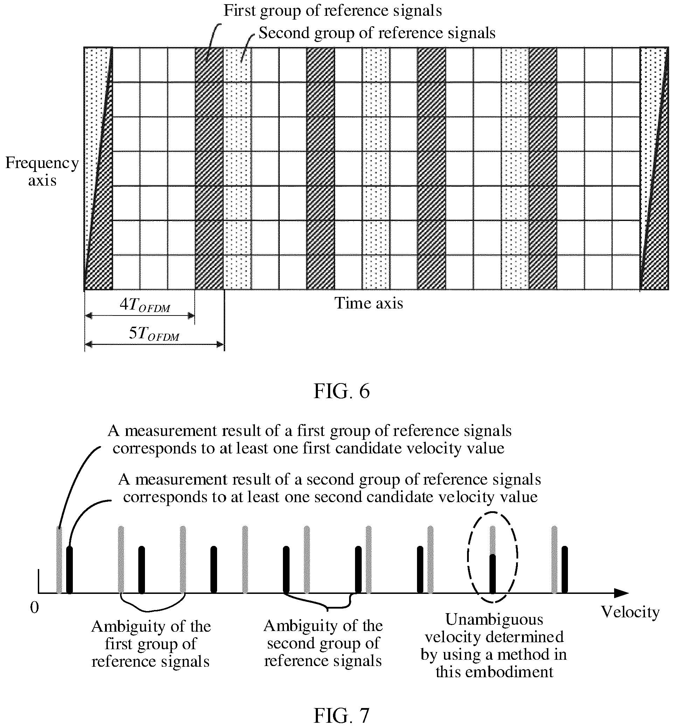

In a double-scale velocity measurement reference signal pattern shown in FIG. 6, the first group of reference signals includes the M1 first reference signals sent at an interval (M1=5 herein), and the second group of reference signals includes the M2 second reference signals sent at an interval (M2=4 herein). In FIG. 6, the time length T of the time unit is a symbol, the sending time interval between the first reference signals is four symbols (namely, $S_1T$ = 4 * 1 = 4 symbols), and the sending time interval between the second reference signals is five symbols (namely, $S_2T$ = 5 * 1 = 5 symbols). Optionally, FIG. 6 is described by using an example in which T is an OFDM symbol. T may alternatively be a slot, a frame, a pulse, a burst, or the like.

FIG. 7 is a schematic diagram of unambiguous velocity measurement using double-scale reference signals. When a velocity is measured by using two groups of reference signals, velocities are first respectively measured by using the two groups of reference signals: At least one first candidate velocity value may be obtained by measuring a first group of reference signals, and a measurement result of the first group of reference signals corresponds to the at least one first candidate velocity value. Similarly, at least one second candidate velocity value may be obtained by measuring a second group of reference signals, and a measurement result of the second group of reference signals corresponds to the at least one second candidate velocity value. Theoretically, a real velocity value should belong to both the at least one first candidate velocity value determined by using the first group of reference signals and the at least one second candidate velocity value determined by using the second group of reference signals. When two velocities in the two groups of candidate velocity values are equal/close (as shown in FIG. 7, one of the first candidate velocity values overlaps one of the second candidate velocity values), the two velocities may be considered as a real velocity of the first device relative to the first target object. In other words, the velocity of the first device relative to the first target object is a velocity value that makes a difference between the first candidate velocity value and the second candidate velocity value less than or equal to a first specified value. The velocity value less than or equal to the first specified value may be the first candidate velocity value, may be the second candidate velocity value, may be the first candidate velocity value and the second candidate velocity value (when the first candidate velocity value is equal to the second candidate velocity value), or may be a weighted average value of the first candidate velocity value and the second candidate velocity value.

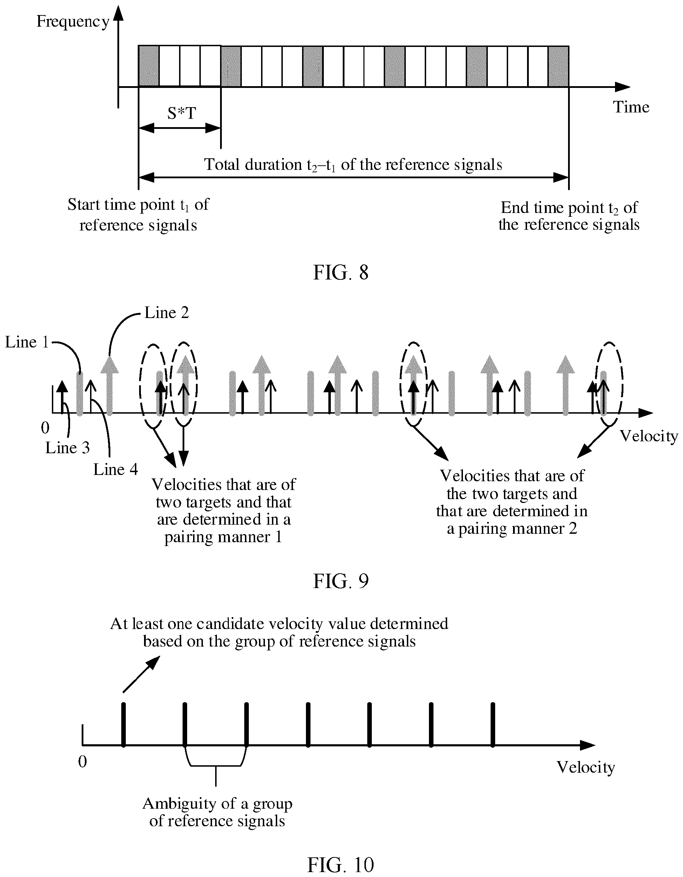

In addition, FIG. 8 is a schematic diagram of key parameters of a velocity measurement reference signal on a time axis. Each group of reference signals sent by the first device in one time period includes the following key parameters: a time point (referred to as a start time point) $t_1$ of an earliest reference signal in one group of reference signals in the time period, a time point (referred to as an end time point) $t_2$ of a last reference signal in the group of reference signals, total duration $t_2 - t_1$ of the reference signal group (namely, a difference between the time point of the last reference signal in the group of reference signals and the time point of the earliest reference signal in the group of reference signals), and duration $S * T$ of a time interval between reference signals in the group of reference signals. In this embodiment, the key parameters have the following features:

It is assumed that the time point of the earliest reference signal in the first group of reference signals in the time period is $t_1^{(1)}$, the time point of the earliest reference signal in the second group of reference signals in the time period is $t_1^{(2)}$, the time point of the last reference signal in the first group of reference signals in the time period is $t_2^{(1)}$, and the time point of the last reference signal in the second group of reference signals in the time period is $t_2^{(2)}$. In this case, $t_1^{(1)}$ may be less than, equal to, or greater than $t_1^{(2)}$, in other words, there is no mandatory constraint on a sequence of sending the two groups of reference signals. In addition, $t_2^{(1)}$ may be less than, equal to, or greater than $t_2^{(2)}$, in other words, there is no mandatory constraint on a sequence of completing the sending of the two groups of reference signals. Actually, if the start time points and/or the end time points of the two groups of reference signals greatly differ, a velocity of the target has changed greatly when the two groups of reference signals are separately measured, causing a large deviation in a final velocity measurement result. Therefore, a difference $\left| t_1^{(1)} - t_1^{(2)} \right|$ between the start time points of the two groups of reference signals is preferably less than or equal to a first threshold. A specific value of the first threshold depends on an application scenario. In a scenario with a higher velocity, the first threshold should be smaller. Similarly, a difference $\left| t_2^{(1)} - t_2^{(2)} \right|$ between the end time points of the two groups of reference signals is preferably less than or equal to a second threshold. A specific value of the second threshold depends on an application scenario. In the scenario with a higher velocity, the threshold should be smaller.

In addition, because the total duration of the reference signals is directly related to a physical resolution of velocity measurement (a theoretical formula for the physical resolution of the velocity measurement is $\frac{1}{t_2-t_1}\frac{c_0}{2f_c}$), to enable the two groups of reference signals to have close velocity resolutions, a ratio of total duration of the two groups of reference signals should be kept within a specific threshold range. Specifically, a ratio ($\frac{t_2^{(1)}-t_1^{(1)}}{t_2^{(2)}-t_1^{(1)}}$) of total duration of the first group of reference signals to total duration of the second group of reference signals is less than or equal to a third threshold.

For the first threshold, the second threshold, or the third threshold, a default value may be configured at delivery of the first device; or a value may be obtained through real-time calculation/adjustment based on a current scenario. Alternatively, the first threshold, the second threshold, or the third threshold may be manually set by personnel based on a scenario, or may be adjusted by the first device based on a motion status of the first device. Alternatively, the first target object sends some indication information to the first device. For example, the first target object notifies the first device that the first target object is a vehicle or a wearable device.

For example, the method may further include: The first device receives first indication information from the first target object, where the first indication information indicates current motion status information of the first target object. The first device adjusts at least one of the first threshold, the second threshold, or the third threshold based on the received first indication information.

For another example, the method may further include: The first device receives second indication information from the first target object, where the second indication information indicates an attribute of the first target object. The first device adjusts at least one of the first threshold, the second threshold, or the third threshold based on the received second indication information. The attribute of the first target object indicates that the first target object is a vehicle, a wearable device, or the like.

Specifically, for the first threshold and the second threshold, to ensure that a velocity change remains within a range of half of the resolution during one time of velocity measurement, the first threshold and/or the second threshold needs to meet $\alpha t < \frac{v_{reso}}{2}$, where t is the first threshold and/or the second threshold, $\alpha$ is an acceleration, and $v_{reso}$ is the velocity resolution. Related indication information for setting these parameters may be sent to the first device through the first target object. For example, for a person (or a wearable device), assuming that the acceleration $\alpha$ may reach 2 m/s, and the velocity resolution $v_{reso}$ is set to 5 cm/s in precision, t should be less than 0.0125s.

For the third threshold, in general, the value should be as close as possible to 1, so that velocity resolutions of a plurality of groups of reference signals are as consistent as possible. Generally, a smaller velocity resolution indicates a larger allowed range of the value than a larger velocity resolution. This is mainly because when the velocity resolution is small, even if the value is slightly larger, an absolute value difference between the velocity resolutions of the plurality of groups of reference signals may remain at a small value. The value may be adjusted and set by using some indication information sent by the first target object to the first device (for example, generally, a velocity resolution for the person (or the wearable device) is less than a velocity resolution in a vehicle scenario, and therefore the value may be allowed to be slightly greater in a person scenario).

S502: The first device sends the n groups of reference signals.

After generating the n groups of reference signals, the first device sends the n groups of reference signals. Optionally, the first device may or may not simultaneously send the n groups of reference signals. The first device may send the n groups of reference signals in a broadcast manner.

Further, the first device may send the n groups of reference signals for single-target velocity measurement. Therefore, the method may further include step S503. This step is an optional step, and is represented and connected by dashed lines in the figure.

S503: The first device obtains the velocity relative to the first target object.

In this embodiment, the first device may obtain the velocity of the first device relative to the first target object in a self-sending and self-receiving manner. To be specific, the first device sends the n groups of reference signals, the n groups of reference signals are reflected to the first device through the first target object, and the first device measures signals reflected through the first target object, to obtain the velocity of the first device relative to the first target object.

In the self-sending and self-receiving manner, the measurable maximum unambiguous velocity is $\frac{c_0}{4f_cT}$ when the reference signals are sent at the interval of the time length of one time unit. The reflection includes diffuse reflection and specular reflection. Optionally, the velocity may alternatively be obtained by measuring reference signals obtained by performing another process, for example, scattering or diffraction, on the n groups of reference signals by the first target object.

Alternatively, the first device may obtain the velocity of the first device relative to the first target object in a manner of self-sending and receiving from another device. Specifically, the first device sends the n groups of reference signals.

In addition, the first device further sends third indication information, where the third indication information indicates at least one of the following information:

the time point of the earliest first reference signal in the first group of reference signals and the time point of the earliest second reference signal in the second group of reference signals;
the time point of the last first reference signal in the first group of reference signals and the time point of the last second reference signal in the second group of reference signals;
the quantity M1 of first reference signals in the first group of reference signals and the quantity M2 of second reference signals in the second group of reference signals;
a sending time interval parameter $S_1$ and/or $S_1T$ of the first reference signals in the first group of reference signals and a sending time interval parameter $S_2$ and/or $S_2T$ of the second reference signals in the second group of reference signals; and
a time offset between the first reference signal in the first group of reference signals and the second reference signal in the second group of reference signals.

The first target object receives the n groups of reference signals, measures the n groups of reference signals to obtain the velocity of the first device relative to the first target object or a result of measuring the n groups of reference signals, and optionally, generates indication information. The indication information indicates the velocity of the first device relative to the first target object or the result of measuring the n groups of reference signals. The first target object sends the indication information. The first device receives the indication information. Specifically, the indication information indicates the velocity of the first device relative to the first target object. In this case, the first device may directly obtain the velocity of the first device relative to the first target object based on the indication information. The indication information indicates the result of measuring the n groups of reference signals. In this case, the first device processes the result of measuring the n groups of reference signals, to obtain the velocity of the first device relative to the first target object. For example, the indication information indicates n $v_{start}$ obtained by the first target object based on the n groups of reference signals. After receiving these $v_{start}$, the first device further calculates the unambiguous velocity of the first device relative to the first target object. In the manner of self-sending and receiving from another device, a measurable maximum unambiguous velocity is $\dfrac{c_0}{2f_cT}$ when reference signals occupy all symbols. It can be learned that the measurable maximum unambiguous velocity in the scenario of self-sending and receiving from another device is twice that generated when the reference signals are sent at the interval of the time length of one time unit in the self-sending and self-receiving scenario. In addition, when a cycle is large, a measurable maximum unambiguous velocity in the manner of self-sending and receiving from another device is also twice that generated in the self-sending and self-receiving manner.

In addition, in the manner of self-sending and receiving from another device, there may be only one sensed target, in other words, there is no problem of multi-target velocity pairing ambiguity and multi-target velocity combination, and the solution has good adaptability.

The following uses $S_1 = R$ and $S_2 = R + 1$ as an example (R is an integer greater than 1) to describe a double scale-based unambiguous velocity measurement process (actually, values of $S_1$ and $S_2$ may be determined in another manner, provided that $S_1$ and $S_2$ meet a coprime relationship. In addition, the algorithm may alternatively be another method, and is merely an example herein). Assuming that the velocities measured by using the two groups of reference signals are respectively $v_{start1}$ and $v_{start2}$, the following three cases are discussed:

When $v_{start1} < v_{start2}$, $$v_{start1} + \frac{H}{R}\frac{2c_0}{4f_cT} = v_{start2} + \frac{H}{R+1}\frac{2c_0}{4f_cT}$$, where H is a quantity of integral cycles of ambiguity of the first reference signal. $H = (v_{start2} - v_{start1})R(R + 1) * \dfrac{2f_cT}{c_0}$ may be obtained. Therefore, a real velocity is: $$v = v_{start1} + \frac{H}{R}\frac{2c_0}{4f_cT} = v_{start1} + (v_{start2} - v_{start1})(R + 1).$$

When $v_{start1} > V_{start2}$, $v_{start1} + \frac{H}{R}\frac{2c_0}{4f_cT} = v_{start2} + \frac{H+1}{R+1}\frac{2c_0}{4f_cT}$ , and

$$H = (v_{start2} - v_{start1})R(R+1) * \frac{2f_cT}{c_0} + R$$

is obtained. Therefore, a real velocity is: $v$ = +

$\frac{H}{R}\frac{2c_0}{4f_cT} = v_{start1} + (v_{start2} - v_{start1})(R + 1) + \frac{c_0}{2f_cT}$ .

When $v_{start1} = v_{start2}$, $v = v_{start1} = v_{start2}$.

It can be learned that, in comparison with the solution in which the reference signals occupy all the symbol resources in FIG. 3a, in this embodiment, the reference signals may be sent at a specific time interval, to reduce power consumption of the first device, and obtain the unambiguous velocity. In FIG. 3a, the reference signals need to be sent on 21 symbols to occupy all the symbols. However, in this embodiment, two groups of reference signals are used, where the sending time interval between the first reference signals in the first group of reference signals is four symbols, and the sending time interval between the second reference signals in the second group of reference signals is five symbols. In this case, only nine symbol resources need to be occupied, and 57% symbol resources can be saved.

Compared with the solution of simply sending a single group of reference signals in FIG. 3b, this embodiment can implement the unambiguous velocity measurement within a velocity range of interest (which is the maximum unambiguous velocity $\frac{c_0}{4f_cT_{OFDM}}$ that is measurable when the reference signals occupy all the symbols).

Therefore, this embodiment can achieve a comprehensively good effect between reducing the power consumption of the first device and implementing the unambiguous velocity.

According to the sensing method provided in this embodiment of this application, at least two groups of reference signals are sent at specific time intervals for the single-target velocity measurement, so that a unique measurement value can be obtained, to reduce the power consumption of the first device, and implement the unambiguous velocity measurement.

In addition, in a multi-target scenario, FIG. 9 is a schematic diagram of pairing ambiguity in velocity measurement performed on two targets (a target 1 and a target 2) by using two scales. Velocities of the two targets measured based on the first group of reference signals are respectively $v_{start11}$ and $v_{start12}$. Correspondingly, two groups of candidate velocity values (which are respectively represented by a line 1 and a line 2) may be separately obtained according to a formula $v_{start} + kv_{step}$. Velocities of the two targets measured based on the second group of reference signals are respectively $v_{start21}$ and $v_{start22}$. Correspondingly, two groups of candidate velocity values (which are respectively represented by a line 3 and a line 4) may be separately obtained according to the formula $v_{start} + kv_{step}$. In this case, there are two pairing manners. One pairing manner is the target 1 {$v_{start11}$, $v_{start21}$} (pairing the line 1 and the line 3) and the target 2 {$v_{start12}$, $v_{start22}$} (pairing the line 2 and the line 4), and the other pairing manner is the target 1 {$v_{start11}$, $v_{start22}$} (pairing the line 1 and the line 4) and the target 2 {$v_{start12}$, $v_{start21}$} (pairing the line 2 and the line 3). Velocity values of the two targets can be respectively calculated in the two pairing manners. However, only one pairing manner is correct, and velocities calculated in the other pairing manner is incorrect. Therefore, the correct pairing manner cannot be identified by using only double-scale reference signals, and a pairing ambiguity problem exists.

In addition, FIG. 10 is a schematic diagram of a target combination problem in a multi-target scenario. In the multi-target scenario, when a velocity difference between targets is exactly an integer multiple $kv_{step}$ of ambiguity of a specific group of reference signals, only one group of candidate velocity values can be determined by using the group of reference signals, and a plurality of targets may be considered as only one target. Consequently, the target combination problem occurs.

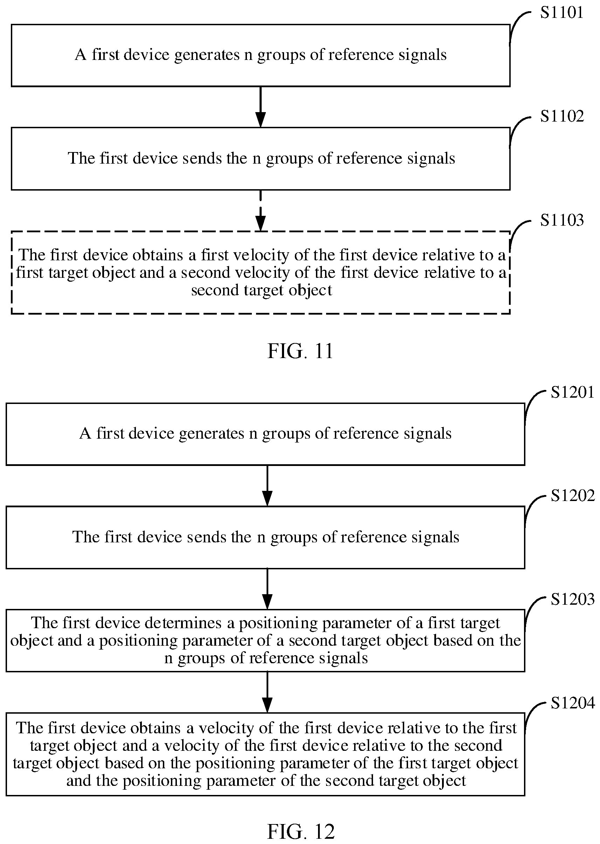

Based on the pairing ambiguity and target combination problems that may exist in the foregoing multi-target scenario, as shown in FIG. 11, an embodiment of this application provides another sensing method. The method includes the following steps.

S1101: A first device generates n groups of reference signals, where n≥3; in the n groups of reference signals, a first group of reference signals includes M1 first reference signals sent at an interval, a second group of reference signals includes M2 second reference signals sent at an interval, and a third group of reference signals includes M3 third reference signals sent at an interval; and a sending time interval between the first reference signals is $S_1T$, a sending time interval between the second reference signals is $S_2T$, a sending time interval of the third group of reference signals in the n groups of reference signals is $S_3T$, $S_1$, $S_2$, and $S_3$ are coprime positive integers, T is a time length of one time unit, and M1, M2, and M3 are integers greater than 1.

This embodiment is applied to a multi-target velocity measurement scenario. In this embodiment, one or more groups of reference signals (n≥3) are added based on double-scale reference signals, to resolve pairing ambiguity and target combination problems in the multi-target scenario. The added third group of reference signals includes the M3 third reference signals sent at an interval, and the sending time interval of the third group of reference signals is $S_3 T$, where $S_1$, $S_2$, and $S_3$ are coprime numbers.

Still refer to FIG. 8. Each group of reference signals sent by the first device in one time period includes the following key parameters: a time point (referred to as a start time point) $t_1$ of an earliest reference signal in one group of reference signals in the time period, a time point (referred to as an end time point) $t_2$ of a last reference signal in the group of reference signals, total duration $t_2 - t_1$ of the reference signal group (namely, a difference between the time point of the last reference signal in the group of reference signals and the time point of the earliest reference signal in the group of reference signals), and duration $S * T$ of a sending interval between reference signals in the group of reference signals. In this embodiment, the key parameters have the following features:

It is assumed that a start time point of a pattern of each group of reference signals is $t_1^{(i)}$, where i = 1, 2, 3, ..., or L, and L is a quantity of used groups of reference signals. It is assumed that an end time point of the pattern of each group of reference signals is $t_2^{(i)}$, where i = 1, 2, 3, ..., or L, and L is the quantity of used reference signal groups.

In this case, there is no mandatory constraint on either a value relationship between start time points $t_1^{(n_1)}$ and $t_1^{(n_2)}$ of patterns of any two groups of reference signals or a value relationship between end time points $t_2^{(n_1)}$ and $t_2^{(n_2)}$ of the patterns of the any two groups of reference signals. Actually, if start time points and/or end time points of different reference signals greatly differ, a velocity of a target has changed greatly when the different reference signals are separately measured, causing a large deviation in a final velocity measurement result. Therefore, a difference

$$\left| t_1^{(n_1)} - t_1^{(n_2)} \right|$$

between the start time points of the any two groups of reference signals is preferably less than or equal to a first threshold. A specific value of the first threshold depends on an application scenario. In a scenario with a higher velocity, the first threshold should be smaller. Similarly, a difference $\left| t_2^{(n_1)} - t_2^{(n_2)} \right|$ between the end time points of the any two groups of reference signals is preferably less than or equal to a second threshold. A specific value of the second threshold depends on an application scenario. In the scenario with a higher velocity, the second threshold should be smaller.

In addition, because total duration of reference signals is directly related to a physical resolution of velocity measurement (a theoretical formula for the physical resolution of the velocity measurement is $\frac{1}{t_2 - t_1} \frac{c_0}{2 f_c}$), to enable the any two groups of reference signals to have close velocity measurement resolutions, a ratio of total duration of the any two groups of reference signals should be kept within a specific threshold range. This is because if the n groups of reference signals differ greatly in the velocity resolution, velocities determined by using the n groups of reference signals may fail to correspond to each other. For example, there are two targets whose velocities are respectively 10 m/s and 11 m/s. If a resolution of the first group of reference signals is 0.5 m/s, the two velocity values can be well identified. However, if a resolution of the second group of reference signals is 2 m/s, the second group of reference signals causes mixing of the two targets, and only one velocity measurement value can be obtained. Specifically, a ratio ( $\frac{t_2^{(n_1)} - t_1^{(n_1)}}{t_2^{(n_2)} - t_1^{(n_2)}}$ ) of total duration of an n1th group of reference signals to total duration of an n2th group of reference signals is less than or equal to a third threshold.

For setting of the first threshold, the second threshold, and the third threshold, refer to the foregoing descriptions.

For the target combination problem, if two velocities are combined under the first group of reference signals in which the sending time interval between the reference signals is $S_1 T$, the two velocities are not combined under the other group of reference signals in which the sending time interval between the reference signals is $S_2 T$. This ensures that the target combination problem in the multi-target case can be resolved theoretically by using the method that is based on a multi-scale reference signal pair.

Under the n groups of reference signals (n≥3), for the problems such as pairing ambiguity and target combination, an algorithm idea that may be applied is as follows: When a velocity of a target is measured by using A groups of reference signals, if a value of a candidate velocity corresponding to B groups of reference signals is equal to a specific velocity (A and B are positive integers, and A≥B), it is considered that there is a real target at the velocity, and a velocity value of the target is obtained.

S1 102: The first device sends the n groups of reference signals.

After generating the n groups of reference signals, the first device sends the n groups of reference signals. Optionally, the first device may or may not simultaneously send the n groups of reference signals. The first device may send the n groups of reference signals in a broadcast manner.

Further, the first device may send the n groups of reference signals for multi-target velocity measurement. Therefore, the method may further include step S1103. This step is an optional step, and is represented and connected by dashed lines in the figure.

S1103 : The first device obtains a first velocity of the first device relative to a first target object and a second velocity of the first device relative to a second target object.

The first device may obtain the first velocity of the first device relative to the first target object and the second velocity of the first device relative to the second target object in a self-sending and self-receiving manner. To be specific, the first device sends the n groups of reference signals, and the n groups of reference signals are reflected to the first device separately through the first target object and the second target object. The first device measures reference signals reflected through the first target object, to obtain the first velocity of the first device relative to the first target object; and measures reference signals reflected through the second target object, to obtain the second velocity of the first device relative to the second target object.

The first device may alternatively obtain the first velocity of the first device relative to the first target object and the second velocity of the first device relative to the second target object in a manner of self-sending and receiving from another device. Specifically, the first device sends the n groups of reference signals.

In addition, the first device further sends fourth indication information, where the fourth indication information indicates at least one of the following information:

a time point of an earliest first reference signal in the first group of reference signals and a time point of an earliest second reference signal in the second group of reference signals;

a time point of a last first reference signal in the first group of reference signals and a time point of a last second reference signal in the second group of reference signals;

the quantity M1 of first reference signals in the first group of reference signals and the quantity M2 of second reference signals in the second group of reference signals;

a sending time interval parameter $S_1$ and/or $S_1 T$ of the first reference signals in the first group of reference signals and a sending time interval parameter $S_2$ and/or $S_2 T$ of the second reference signals in the second group of reference signals; and

a time offset between the first reference signal in the first group of reference signals and the second reference signal in the second group of reference signals.

The first target object receives the n groups of reference signals, measures the n groups of reference signals to obtain the velocity of the first device relative to the first target object or a result of measuring the n groups of reference signals, and optionally, generates first indication information. The first indication information indicates the first velocity of the first device relative to the first target object or the result of measuring the n groups of reference signals. The first target object sends the first indication information. The first device receives the first indication information. Similarly, the second target object receives the n groups of reference signals, measures the n groups of reference signals to obtain the velocity of the first device relative to the second target object or a result of measuring the n groups of reference signals, and optionally, generates second indication information. The second indication information indicates the second velocity of the first device relative to the second target object or the result of measuring the n groups of reference signals. The second target object sends the second indication information. The first device receives the second indication information.

Specifically, the first indication information indicates the first velocity of the first device relative to the first target object, and the second velocity indication information indicates the second velocity of the first device relative to the second target object. In this case, the first device may obtain the velocity of the first device relative to the first target object and the velocity of the first device relative to the second target object with reference to the first indication information and the second indication information. The first indication information indicates the result of measuring the n groups of reference signals by the first target object, and the second indication information indicates the result of measuring the n groups of reference signals by the second target object. In this case, the first device processes the two results of measuring the n groups of reference signals, to obtain the velocity of the first device relative to the first target object and the velocity of the first device relative to the second target object.

According to the sensing method provided in this embodiment of this application, three or more groups of reference signals are sent at specific time intervals for multi-target measurement, so that the unique unambiguous velocity of each target can be obtained, to reduce power consumption of the first device, and implement unambiguous velocity measurement.

Based on the pairing ambiguity and target combination problems that may exist in the foregoing multi-target scenario, as shown in FIG. 12, an embodiment of this application provides still another sensing method. The method includes the following steps.

S1201: A first device generates n groups of reference signals, where n≥3; in the n groups of reference signals, a first group of reference signals includes M1 first reference signals sent at an interval, a second group of reference signals includes M2 second reference signals sent at an interval, and a third group of reference signals includes M3 third reference signals sent at an interval; and a sending time interval between the first reference signals is $S_1T$, a sending time interval between the second reference signals is $S_2T$, a sending time interval of the third group of reference signals in the n groups of reference signals is $S_3T$, $S_1$, $S_2$, and $S_3$ are coprime positive integers, T is a time length of one time unit, and M1, M2, and M3 are integers greater than 1.

For a specific implementation of this step, refer to step S1001.

S1202: The first device sends the n groups of reference signals.

For a specific implementation of this step, refer to step S1002.

S1203: The first device determines a positioning parameter of a first target object and a positioning parameter of a second target object based on the n groups of reference signals, where the positioning parameter includes at least one of the following: a distance and an angle.

The n groups of reference signals may be further for positioning in addition to velocity sensing. The first device obtains a distance between the first device and the first target object and a distance between the first device and the second target object based on the n groups of reference signals, and/or obtains an angle between the first device and the first target object and an angle between the first device and the second target object based on the n groups of reference signals.

The first device may identify the first target object and the second target object based on any one or more of the distance between the first device and the first target object, the distance between the first device and the second target object, the angle between the first device and the first target object, and the angle between the first device and the second target object.

S1204: The first device obtains a velocity of the first device relative to the first target object and a velocity of the first device relative to the second target object based on the positioning parameter of the first target object and the positioning parameter of the second target object.

After identifying the first target object and the second target object, and when obtaining a velocity of the first device relative to a specific target object, the first device may determine whether the velocity is the velocity of the first device relative to the first target obj ect or the velocity of the first device relative to the second target object; or when obtaining specific indication information, the first device may determine a specific target object that reflects the indication information, to determine the velocity of the first device relative to the target object based on to the indication information.

Actually, the positioning parameter is used in this embodiment. In this case, velocity measurement becomes a single-target velocity measurement scenario in most cases. Generally, there is only one moving target in a specific distance and at a specific direction angle. Therefore, this means that the scenario changes to the single-target velocity measurement scenario.

According to the sensing method provided in this embodiment of this application, the n groups of reference signals are sent at specific time intervals for multi-target measurement, a plurality of targets can be identified with reference to the spatial sensing parameters obtained by measuring the n groups of reference signals, and the unique unambiguous velocity of each target can be obtained, thereby reducing power consumption of the first device, and implementing unambiguous velocity measurement.

It may be understood that, to implement the functions in the foregoing embodiments, the first device includes a corresponding hardware structure and/or software module for performing each function. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

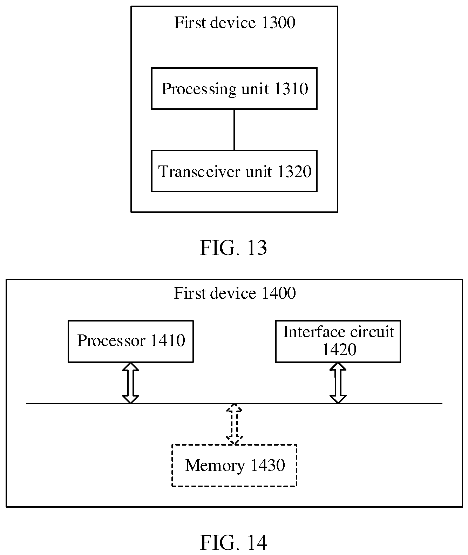

FIG. 13 is a possible schematic diagram of a structure of a first device according to an embodiment of this application. The first device may be configured to implement a function of the first device in the foregoing method embodiments, and therefore can also implement the beneficial effects of the foregoing method embodiments. As shown in FIG. 13, the first device 1300 includes a processing unit 1310 and a transceiver unit 1320.

The processing unit 1310 is configured to generate n groups of reference signals, where n≥2; in the n groups of reference signals, a first group of reference signals includes M1 first reference signals sent at an interval, and a second group of reference signals includes M2 second reference signals sent at an interval; and a sending time interval between the first reference signals is $S_1T,$ a sending time interval between the second reference signals is $S_2T,$ $S_1$ and $S_2$ are coprime positive integers, T is a time length of one time unit, and M1 and M2 are integers greater than 1. The transceiver unit 1320 is configured to send the n groups of reference signals.

Optionally, the first device sends the n groups of reference signals in one time period, where in the time period, a difference between a time point of an earliest first reference signal in the first group of reference signals in the n groups of reference signals and a time point of an earliest second reference signal in the second group of reference signals is less than or equal to a first threshold; and/or in the time period, a difference between a time point of a last first reference signal in the first group of reference signals in the n groups of reference signals and a time point of a last second reference signal in the second group of reference signals is less than or equal to a second threshold.

Optionally, in the n groups of reference signals, a ratio of total duration of the first group of reference signals to total duration of the second group of reference signals is less than or equal to a third threshold, where the total duration of the first group of reference signals is a difference between the time point of the last first reference signal in the first group of reference signals and the time point of the earliest first reference signal in the first group of reference signals, and the total duration of the second group of reference signals is a difference between the time point of the last second reference signal in the second group of reference signals and the time point of the earliest second reference signal in the second group of reference signals.

Optionally, the M1 first reference signals sent at an interval include reference signals repeatedly sent at least twice, and the reference signals repeatedly sent at least twice are determined based on a same sequence. Alternatively, the M1 first reference signals sent at an interval include one reference signal determined based on a first sequence and one reference signal determined based on a second sequence, the first sequence and the second sequence are components of a third sequence, and lengths of the first sequence and the second sequence are respectively N1 and N2.

Optionally, the processing unit 1310 is further configured to determine a third sequence x(l) whose length is N3, where l=0, 1, ..., or N3-1, the third sequence is any one of the following sequences: a Zad-off Chu sequence, an m-sequence, a Gold sequence, or a Gray sequence, and N1 is greater than or equal to a sum of N1 and N2. The transceiver unit 1320 is further configured to send the first sequence x(i) in a first time unit, where a1≤i<b1, a1≥0, and b1-a1=N1. The transceiver unit 1320 is further configured to send the second sequence x(j) in a second time unit, where c1≤j<d1, c1 is an integer greater than or equal to b1, d1<N3, d1-c1=N2, and a time interval between the second time unit and the first time unit is $S_1T.$

Optionally, the M2 second reference signals sent at an interval include reference signals repeatedly sent at least twice, and the reference signals repeatedly sent at least twice are determined based on a same sequence. Alternatively, the M2 second reference signals sent at an interval include one reference signal determined based on a fourth sequence and one reference signal determined based on a fifth sequence, the fourth sequence and the fifth sequence are components of a sixth sequence, and lengths of the fourth sequence and the fifth sequence are respectively N4 and N5.

Optionally, the processing unit 1310 is further configured to determine the sixth sequence y(w) whose length is N6, where w=0, 1, ..., or N6-1, the sixth sequence is any one of the following sequences: a Zad-off Chu sequence, an m-sequence, a Gold sequence, or a Gray sequence, and N6 is greater than or equal to a sum of N4 and N5. The transceiver unit 1320 is further configured to send the fourth sequence y(p) in a third time unit, where a2≤p<b2, a2≥0, and b2-a2=N4. The transceiver unit 1320 is further configured to send the fifth sequence y(v) in a fourth time unit, where c2≤v<d2, c2 is an integer greater than or equal to b2, d2<N6, d2-c2=N5, and a time interval between the fourth time unit and the fifth time unit is $S_2T.$

Optionally, the processing unit 1310 is further configured to obtain a velocity relative to a first target object, where the velocity is obtained by measuring reflected reference signals of the n groups of reference signals.

Optionally, the transceiver unit 1320 is further configured to receive indication information, where the indication information indicates a velocity of the first device relative to a first target object or a result of measuring the n groups of reference signals.

Optionally, n≥3, a third group of reference signals includes M3 third reference signals sent at an interval, a sending time interval of the third group of reference signals is $S_3T,$ M3 is an integer greater than 1, and $S_1,$ $S_2,$ and $S_3$ are coprime numbers.

Optionally, the processing unit 1310 is further configured to obtain a first velocity of the first device relative to a first target object and a second velocity of the first device relative to a second target object, where the first velocity and the second velocity are obtained by measuring the n groups of reference signals.

Optionally, the processing unit 1310 is further configured to determine a positioning parameter of the first target object and a positioning parameter of the second target object based on the n groups of reference signals, where the positioning parameter includes at least one of the following: a distance and an angle. The processing unit 1310 is further configured to obtain the velocity of the first device relative to the first target object and the velocity of the first device relative to the second target object based on the positioning parameter of the first target object and the positioning parameter of the second target object.

For more detailed descriptions of the processing unit 1310 and the transceiver unit 1320, directly refer to related descriptions in the method embodiments shown in FIG. 5, FIG. 11, and FIG. 12. Details are not described herein again.

As shown in FIG. 14, a first device 1400 includes a processor 1410 and an interface circuit 1420. The processor 1410 and the interface circuit 1420 are coupled to each other. It may be understood that the interface circuit 1420 may be a transceiver or an input/output interface. Optionally, the first device 1400 may further include a memory 1430, configured to store instructions executed by the processor 1410, store input data required by the processor 1410 to run the instructions, or store data generated after the processor 1410 runs the instructions.

When the first device 1400 is configured to implement the methods shown in FIG. 5, FIG. 11, and FIG. 12, the processor 1410 is configured to implement a function of the processing unit 1310, and the interface circuit 1420 is configured to implement a function of the transceiver unit 1320.

When the first device is a chip used in a terminal, the chip in the terminal implements a function of the terminal in the foregoing method embodiments. The chip in the terminal receives information from another module (for example, a radio frequency module or an antenna) in the terminal, where the information is sent by an access network device to the terminal. Alternatively, the chip in the terminal sends information to another module (for example, a radio frequency module or an antenna) in the terminal, where the information is to be sent by the terminal to an access network device.

When the first device is a chip used in an access network device, the chip in the access network device implements a function of the access network device in the foregoing method embodiments. The chip in the access network device receives information from another module (for example, a radio frequency module or an antenna) in the access network device, where the information is sent by a terminal to the access network device. Alternatively, the chip in the access network device sends information to another module (for example, a radio frequency module or an antenna) in the access network device, where the information is to be sent by the access network device to a terminal.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by hardware, or may be implemented by the processor by executing software instructions. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be in an ASIC. In addition, the ASIC may be in an access network device or a terminal. Certainly, the processor and the storage medium may exist in the access network device or the terminal as discrete components.

All or some of the foregoing embodiments may be implemented by software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, all or some of the processes or functions in embodiments of this application are executed. The computer may be a general-purpose computer, a special-purpose computer, a computer network, an access network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists. A and B may be singular or plural. In the text descriptions of this application, the character "/" generally indicates an "or" relationship between associated objects. In a formula in this application, the character "/" indicates a "division" relationship between associated objects. In this application, "first" and "second" are merely examples, and there may be one or more "first" and "second". "First" and "second" are only used to distinguish between objects of a same type. A first object and a second object may be a same object, or may be different objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

**Claims**

1.  A reference signal sending method, wherein the method comprises:

    generating, by a first device, n groups of reference signals, wherein $n \geq 2$; in the n groups of reference signals, a first group of reference signals comprises M1 first reference signals sent at an interval, and a second group of reference signals comprises M2 second reference signals sent at an interval; and a sending time interval between the first reference signals is $S_1T$, and a sending time interval between the second reference signals is $S_2T$, wherein $S_1$ and $S_2$ are coprime positive integers, T is a time length of one time unit, and M1 and M2 are integers greater than 1; and
    sending, by the first device, the n groups of reference signals.

2.  The method according to claim 1, wherein the first device sends the n groups of reference signals in one time period, wherein

    in the time period, a difference between a time point of an earliest first reference signal in the first group of reference signals in the n groups of reference signals and a time point of an earliest second reference signal in the second group of reference signals is less than or equal to a first threshold; and/or
    in the time period, a difference between a time point of a last first reference signal in the first group of reference signals in the n groups of reference signals and a time point of a last second reference signal in the second group of reference signals is less than or equal to a second threshold.

3.  The method according to claim 1 or 2, wherein in the n groups of reference signals, a ratio of total duration of the first group of reference signals to total duration of the second group of reference signals is less than or equal to a third threshold, wherein

    the total duration of the first group of reference signals is a difference between the time point of the last first reference signal in the first group of reference signals and the time point of the earliest first reference signal in the first group of reference signals; and
    the total duration of the second group of reference signals is a difference between the time point of the last second reference signal in the second group of reference signals and the time point of the earliest second reference signal in the second group of reference signals.

4.  The method according to any one of claims 1 to 3, wherein the M1 first reference signals sent at an interval comprise reference signals repeatedly sent at least twice, and the reference signals repeatedly sent at least twice are determined based on a same sequence; or
    the M1 first reference signals sent at an interval comprise one reference signal determined based on a first sequence and one reference signal determined based on a second sequence, the first sequence and the second sequence are components of a third sequence, and lengths of the first sequence and the second sequence are respectively N1 and N2.

5.  The method according to claim 4, wherein the method further comprises:

    determining, by the first device, a third sequence x(l) whose length is N3, wherein l=0, 1, ..., or N3-1, the third sequence is any one of the following sequences: a Zad-off Chu sequence, an m-sequence, a Gold sequence, or a Gray sequence, and N3 is greater than or equal to a sum of N1 and N2;
    sending, by the first device, the first sequence x(i) in a first time unit, wherein $a1 \leq i < b1$, $a1 \geq 0$, and b1-a1=N1; and

sending, by the first device, the second sequence x(j) in a second time unit, wherein c1≤j<d1, c1 is an integer greater than or equal to b1, d1<N3, d 1-c 1 = N2, and a time interval between the second time unit and the first time unit is $S_1T$.

**6.** The method according to claim 5, wherein the third sequence is the Zad-off Chu sequence, and the determining, by the first device, a third sequence x(l) whose length is N3 comprises:

determining, by the first device, a ZC sequence whose length is N3:

$$x(l) = Ae^{j\alpha l}x_q(l \bmod N_{ZC}),$$

wherein l = 0,1,2 ..., or N3 - 1; and

$$x_q(m) = e^{-j\frac{\pi qm(m+1)}{N_{ZC}}},$$

wherein
r(l) is the third sequence whose length is N3, wherein l = 0,1, 2, ..., or N3 - 1; $N_{ZC}$ is a largest prime number less than or equal to N3, a smallest prime number greater than N3, a largest prime number less than or equal to 2N3, or a smallest prime number greater than 2N3; q is an integer greater than 0 and less than $N_{ZC}$; A is a complex number unrelated to l; $\alpha$ is a real number unrelated to l; and j is an imaginary unit; and
the method further comprises:

dividing, by the first device, the third sequence into M segments, wherein a length of each segment is $K_i$, i = 0,1, 2, ..., or $M$ - 1, $$N3 = \sum_{i=0}^{M-1} K_i$$ , and M is a positive integer not greater than the quantity M1 of first reference signals in the first group of reference signals or the quantity M2 of second reference signals in the second group of reference signals; and
the first device is capable of determining, based on the third sequence, the first sequence whose length is $K_1$ and the second sequence whose length is $K_2$, wherein the first sequence and the second sequence are segments of the third sequence.

**7.** The method according to claim 5, wherein the third sequence is the m-sequence, and the determining, by the first device, a third sequence x(l) whose length is N3 comprises:

determining, by the first device, an m-sequence whose length is N3:

$$r(l) = x((l + w)\bmod N_M),$$

wherein $l$ = 0,1, 2, ..., or N3 - 1; and

$$x(m + N) = \left(c_N x(m + N - 1) + c_{N-1}x(m + N - 2) + \cdots + c_1 x(m)\right)mod2,$$

wherein m=0, 1, ..., or $2^N$ - $N$ - 2, wherein
$c_i$ is a feedback coefficient of an $i^{th}$ register, and a value of $c_i$ is 1 or 0, wherein i=1, 2, ..., or N, N is a quantity of stages of a shift register, w is an integer unrelated to $l$, and $N_M$ = $2^N$ - 1.

**8.** The method according to claim 5, wherein the third sequence is the Gold sequence, and the determining, by the first device, a third sequence x(l) whose length is N3 comprises:

determining, by the first device, a Gold sequence whose length is N3:

$$r(l) = \big(x_1(l + N_{c1}) + x_2(l + N_{c2})\big) mod 2,$$

wherein $l$=0, 1, ..., or $N_3$ - 1; and
$x_1$ and $x_2$ are both m-sequences, and $N_{c1}$ and $N_{c2}$ are integers.

9. The method according to any one of claims 1 to 3, wherein the M2 second reference signals sent at an interval comprise reference signals repeatedly sent at least twice, and the reference signals repeatedly sent at least twice are determined based on a same sequence; or the M2 second reference signals sent at an interval comprise one reference signal determined based on a fourth sequence and one reference signal determined based on a fifth sequence, the fourth sequence and the fifth sequence are components of a sixth sequence, and lengths of the fourth sequence and the fifth sequence are respectively N4 and N5.

10. The method according to claim 9, wherein the method further comprises:

determining, by the first device, a sixth sequence y(w) whose length is N6, wherein w=0, 1, ..., or N6-1, the sixth sequence is any one of the following sequences: a Zad-off Chu sequence, an m-sequence, a Gold sequence, or a Gray sequence, and N6 is greater than or equal to a sum of N4 and N5;
sending, by the first device, the fourth sequence y(p) in a third time unit, wherein a2≤p<b2, a2≥0, and b2-a2=N4; and
sending, by the first device, the fifth sequence y(v) in a fourth time unit, wherein c2≤v<d2, c2 is an integer greater than or equal to b2, d2<N6, d2-c2=N5, and a time interval between the fourth time unit and the fifth time unit is $S_2T$.

11. The method according to any one of claims 1 to 10, wherein the method further comprises:
obtaining, by the first device, a velocity relative to a first target object, wherein the velocity is obtained by measuring reflected reference signals of the n groups of reference signals.

12. The method according to any one of claims 1 to 10, wherein the method further comprises:
receiving, by the first device, indication information, wherein the indication information indicates a velocity of the first device relative to a first target object or a result of measuring the n groups of reference signals.

13. The method according to any one of claims 1 to 3, wherein n≥3, a third group of reference signals comprises M3 third reference signals sent at an interval, a sending time interval of the third group of reference signals is $S_3T$, M3 is an integer greater than 1, and $S_1$, $S_2$, and $S_3$ are coprime numbers.

14. The method according to claim 13, wherein the method further comprises: obtaining, by the first device, a first velocity of the first device relative to a first target object and a second velocity of the first device relative to a second target object, wherein the first velocity and the second velocity are obtained by measuring the n groups of reference signals.

15. The method according to claim 13 or 14, wherein the method further comprises:

determining, by the first device, a positioning parameter of the first target object and a positioning parameter of the second target object based on the n groups of reference signals, wherein the positioning parameter comprises at least one of the following: a distance and an angle; and
obtaining, by the first device, the velocity of the first device relative to the first target object and the velocity of the first device relative to the second target object based on the positioning parameter of the first target object and the positioning parameter of the second target object.

16. A first device, comprising a module configured to perform the method according to any one of claims 1 to 15.

17. A first device, comprising a processor and an interface circuit, wherein the interface circuit is configured to: receive a signal from a first device other than the first device and transmit the signal to the processor, or send, to a first device other than the first device, a signal that is from the processor; and the processor is configured to implement the method according to any one of claims 1 to 15 through a logic circuit or by executing code instructions.

18. A computer-readable storage medium, wherein the storage medium stores a computer program or instructions; and when the computer program or the instructions are executed by a first device, the method according to any one of claims 1 to 15 is implemented.

FIG. 1

FIG. 2

Reference signal

Frequency
axis

$T_{OFDM}$

Time axis

FIG. 3a

Reference signal

Frequency
axis

$4T_{OFDM}$

Time axis

FIG. 3b

Reference signal

Frequency
axis

$2T_{OFDM}$

Time axis

## FIG. 4

A first device generates n groups of reference signals ⟋ S501

The first device sends the n groups of reference signals ⟋ S502

The first device obtains a velocity relative to a first target object ⟋ S503

## FIG. 5

First group of reference signals

Second group of reference signals

Frequency
axis

$4T_{OFDM}$

$5T_{OFDM}$

Time axis

FIG. 6

A measurement result of a first group of reference signals
corresponds to at least one first candidate velocity value

A measurement result of a second group of reference signals
corresponds to at least one second candidate velocity value

0

Velocity

Ambiguity of the
first group of
reference signals

Ambiguity of the
second group of
reference signals

Unambiguous
velocity determined
by using a method in
this embodiment

FIG. 7

Frequency

S*T

Time

Total duration $t_2-t_1$ of the reference signals

Start time point $t_1$ of
reference signals

End time point $t_2$ of
the reference signals

FIG. 8

Line 2

Line 1

0

Line 3

Line 4

Velocity

Velocities that are of
two targets and that
are determined in a
pairing manner 1

Velocities that are of
the two targets and
that are determined in
a pairing manner 2

FIG. 9

At least one candidate velocity value determined
based on the group of reference signals

0

Velocity

Ambiguity of a group
of reference signals

FIG. 10

S1101

A first device generates n groups of reference signals

S1102

The first device sends the n groups of reference signals

S1103

The first device obtains a first velocity of the first device relative to a first target object and a second velocity of the first device relative to a second target object

FIG. 11

S1201

A first device generates n groups of reference signals

S1202

The first device sends the n groups of reference signals

S1203

The first device determines a positioning parameter of a first target object and a positioning parameter of a second target object based on the n groups of reference signals

S1204

The first device obtains a velocity of the first device relative to the first target object and a velocity of the first device relative to the second target object based on the positioning parameter of the first target object and the positioning parameter of the second target object

FIG. 12

First device 1300

Processing unit 1310

Transceiver unit 1320

FIG. 13

First device 1400

Processor 1410

Interface circuit 1420

Memory 1430

FIG. 14

## INTERNATIONAL SEARCH REPORT

| | International application No. |
|---|---|
| | **PCT/CN2022/086395** |

**A. CLASSIFICATION OF SUBJECT MATTER**

H04L 5/00(2006.01)i

According to International Patent Classification (IPC) or to both national classification and IPC

**B. FIELDS SEARCHED**

Minimum documentation searched (classification system followed by classification symbols)

H04L; H04Q; H04W

Documentation searched other than minimum documentation to the extent that such documents are included in the fields searched

Electronic data base consulted during the international search (name of data base and, where practicable, search terms used)

CNPAT; WPI; EPODOC; CNKI; 3GPP: 两组参考信号, 时间间隔, 速度检测, 速度, 测速, 质数, 参考信号, 发送, 互质, 生成, two sets of reference signals, time interval, speed detection, speed measurement, prime number, reference signal, transmission, prime, generation

**C. DOCUMENTS CONSIDERED TO BE RELEVANT**

| Category* | Citation of document, with indication, where appropriate, of the relevant passages | Relevant to claim No. |
|---|---|---|
| A | CN 108809586 A (VIVO COMMUNICATION TECHNOLOGY CO., LTD.) 13 November 2018 (2018-11-13) description, paragraphs [0082]-[0083] | 1-18 |
| A | CN 108604960 A (QUALCOMM INC.) 28 September 2018 (2018-09-28) entire document | 1-18 |
| A | CN 107733493 A (HUAWEI TECHNOLOGIES CO., LTD.) 23 February 2018 (2018-02-23) entire document | 1-18 |
| A | WO 2015101109 A1 (HUAWEI TECHNOLOGIES CO., LTD.) 09 July 2015 (2015-07-09) entire document | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 June 2022** | **19 July 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/086395**

| Patent document cited in search report | | | Publication date (day/month/year) | Patent family member(s) | | | Publication date (day/month/year) |
|---|---|---|---|---|---|---|---|
| CN | 108809586 | A | 13 November 2018 | None | | | |
| CN | 108604960 | A | 28 September 2018 | WO | 2017087276 | A1 | 26 May 2017 |
| | | | | KR | 20180083858 | A | 23 July 2018 |
| | | | | AU | 2016357253 | A1 | 26 April 2018 |
| | | | | US | 2017141896 | A1 | 18 May 2017 |
| | | | | BR | 112018010000 | A2 | 21 November 2018 |
| | | | | TW | 201724793 | A | 01 July 2017 |
| | | | | EP | 3378183 | A1 | 26 September 2018 |
| | | | | JP | 2019504525 | A | 14 February 2019 |
| CN | 107733493 | A | 23 February 2018 | WO | 2018028310 | A1 | 15 February 2018 |
| | | | | US | 2019173538 | A1 | 06 June 2019 |
| | | | | JP | 2019525637 | A | 05 September 2019 |
| | | | | EP | 3522384 | A1 | 07 August 2019 |
| | | | | EP | 3506519 | A4 | 17 July 2019 |
| WO | 2015101109 | A1 | 09 July 2015 | CN | 107196749 | A | 22 September 2017 |
| | | | | CN | 103746779 | A | 23 April 2014 |
| | | | | CN | 107317614 | A | 03 November 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110597413

- CN 202110978420